# EUROPEAN PATENT APPLICATION

(11) **EP 4 383 773 A1**
(43) Date of publication of application: **12.06.2024**
(21) Application number: 22852299.1
(22) Date of filing: 04.08.2022
(51) Int. Cl.: H04W 8/24

(54) **PDCCH MONITORING METHOD, AND RELATED DEVICE AND READABLE STORAGE MEDIUM**

(30) Priority: 06.08.2021 CN 202110904308
(71) Applicant: Vivo Mobile Communication Co., Ltd., Dongguan, Guangdong 523863 (CN)
(72) Inventor: LI, Gen, Dongguan, Guangdong 523863 (CN)
(74) Representative: Lavoix
(86) International application number: PCT/CN2022/110264
(87) International publication number: WO 2023/011588

(57) **Abstract**

This application pertains to the field of communications technologies, and discloses a PDCCH monitoring method, a related device, and a readable storage medium. The PDCCH monitoring method includes: receiving, by a terminal, first information, where the first information includes at least one of the following: a search space configuration and a PDCCH monitoring capability configuration; determining, by the terminal based on the first information, PDCCH monitoring capabilities corresponding to R search space groups of the terminal, where R is a positive integer; and monitoring, by the terminal, PDCCHs of N cell groups of the terminal based on the PDCCH monitoring capabilities corresponding to the R search space groups.

## Description

### CROSS-REFERENCE TO RELATED APPLICATIONS

This application claims priority to Chinese Patent Application No. 202110904308.9, filed in China on August 6, 2021, which is incorporated herein by reference in its entirety.

### TECHNICAL FIELD

This application pertains to the field of communications technologies, and specifically relates to a PDCCH monitoring method, a related device, and a readable storage medium.

### BACKGROUND

When new radio (New Radio, NR) runs at a high frequency, an increase of a subcarrier spacing (Subcarrier Spacing, SCS) causes a symbol (symbol) granularity and a slot (slot) granularity to decrease. If physical downlink control channel (Physical Downlink Control Channel, PDCCH) monitoring capabilities are defined based on a per-slot (per slot) or per-span (per span, where each span includes a plurality of symbols) granularity, complexity of terminal implementation is increased. Therefore, a solution for defining PDCCH monitoring capabilities based on a plurality of slots is necessary.

However, in a case that there are a plurality of search space types, currently, there is no related solution for defining PDCCH monitoring capabilities based on a plurality of slots.

### SUMMARY

Embodiments of this application provide a PDCCH monitoring method, a related device, and a readable storage medium to resolve a problem in definition of PDCCH monitoring capabilities based on a plurality of slots in a case that there are a plurality of search space types.

According to a first aspect, a PDCCH monitoring method is provided. The method includes:
receiving, by a terminal, first information, where the first information includes at least one of the following: a search space configuration and a PDCCH monitoring capability configuration;
determining, by the terminal based on the first information, PDCCH monitoring capabilities corresponding to R search space groups of the terminal, where R is a positive integer; and
monitoring, by the terminal, PDCCHs of N cell groups of the terminal based on the PDCCH monitoring capabilities corresponding to the R search space groups.

According to a second aspect, a PDCCH monitoring method is provided. The method includes:
sending, by a network-side device, first information, where the first information includes at least one of the following: a search space configuration and a PDCCH monitoring capability configuration.

According to a third aspect, a PDCCH monitoring apparatus is provided. The apparatus includes:
a first receiving module, configured to receive first information, where the first information includes at least one of the following: a search space configuration and a PDCCH monitoring capability configuration;
a first determining module, configured to determine, based on the first information, PDCCH monitoring capabilities corresponding to R search space groups of the terminal, where R is a positive integer; and
a monitoring module, configured to monitor PDCCHs of N cell groups of the terminal based on the PDCCH monitoring capabilities corresponding to the R search space groups.

According to a fourth aspect, a PDCCH monitoring apparatus is provided. The apparatus includes:
a second sending module, configured to send first information, where the first information includes at least one of the following: a search space configuration and a PDCCH monitoring capability configuration.

According to a fifth aspect, a terminal is provided. The terminal includes a processor, a memory, and a program or instructions stored in the memory and capable of running on the processor. When the program or instructions are executed by the processor, the steps of the method according to the first aspect are implemented.

According to a sixth aspect, a network-side device is provided. The network-side device includes a processor, a memory, and a program or instructions stored in the memory and capable of running on the processor. When the program or instructions are executed by the processor, the step of the method according to the second aspect is implemented.

According to a seventh aspect, a terminal is provided and includes a processor and a communication interface, where
the communication interface is configured to:
receive first information, where the first information includes at least one of the following: a search space configuration and a PDCCH monitoring capability configuration; and
the processor is configured to:
   determine, based on the first information, PDCCH monitoring capabilities corresponding to R search space groups of the terminal, where R is a positive integer; and
   monitor PDCCHs of N cell groups of the terminal based on the PDCCH monitoring capabilities corresponding to the R search space groups.

According to an eighth aspect, a network-side device is provided and includes a processor and a communication interface, where the communication interface is configured to:
send first information, where the first information includes at least one of the following: a search space configuration and a PDCCH monitoring capability configuration.

According to a ninth aspect, a readable storage medium is provided. The readable storage medium stores a program or instructions. When the program or instructions are executed by a processor, the steps of the method according to the first aspect are implemented, or the steps of the method according to the second aspect are implemented.

According to a tenth aspect, a chip is provided. The chip includes a processor and a communication interface. The communication interface is coupled to the processor. The processor is configured to run a program or instructions to implement the method according to the first aspect or implement the method according to the second aspect.

According to an eleventh aspect, a computer program product is provided. The computer program product is stored in a non-transitory storage medium. The computer program product is executed by at least one processor to implement the method according to the first aspect or implement the method according to the second aspect.

In the embodiments of this application, the terminal can map the R search space group to the N cell groups, and the terminal can determine the PDCCH monitoring capabilities corresponding to the R search space groups, to monitor the PDCCHs of the N cell groups of the terminal. As can be learned, this application can define various types of PDCCH monitoring capabilities by using a search space group as a granularity, thereby improving flexibility of the search space configuration.

### BRIEF DESCRIPTION OF DRAWINGS

FIG. 1 is a schematic diagram of a wireless communications system according to an embodiment of this application;
FIG. 2 is a first flowchart of a PDCCH monitoring method according to an embodiment of this application;
FIG. 3 is a second flowchart of a PDCCH monitoring method according to an embodiment of this application;
FIG. 4 is a schematic diagram of PDCCH monitoring according to an embodiment of this application;
FIG. 5 is a first structural diagram of a PDCCH monitoring apparatus according to an embodiment of this application;
FIG. 6 is a second structural diagram of a PDCCH monitoring apparatus according to an embodiment of this application;
FIG. 7 is a structural diagram of a communication device according to an embodiment of this application;
FIG. 8 is a structural diagram of a terminal according to an embodiment of this application; and
FIG. 9 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communications system.

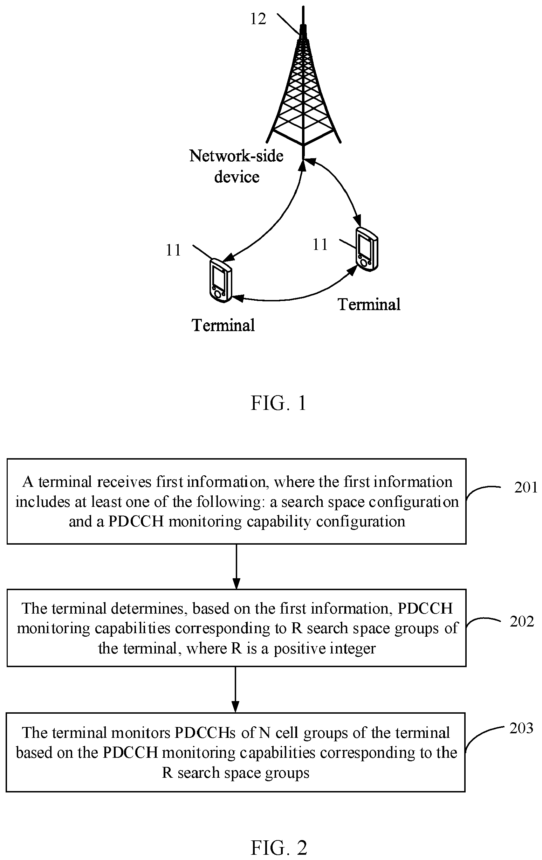

FIG. 1 is a schematic diagram of a wireless communications system according to an embodiment of this application. The wireless communications system includes a terminal 11 and a network-side device 12. The terminal 11 may be a UE-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), a vehicular user equipment (Vehicle User Equipment, VUE), a pedestrian user equipment (Pedestrian User Equipment, PUE), or a smart home (a home device having a wireless communication function, such as a refrigerator, a television, a washing machine, or furniture). The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, a game console, or the like. The network-side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a Wireless Fidelity (Wireless Fidelity, Wi-Fi) node, a transmission and reception point (Transmitting and Receiving Point, TRP), or another appropriate term in the art, as long as the same technical effect is achieved. The base station is not limited to specific technical terms. It should be noted that in the embodiments of this application, only a base station in an NR system is used as an example, but a specific type of the base station is not limited.

For ease of understanding, the following describes some content in the embodiments of this application.
1. Physical downlink control channel (Physical Downlink Control Channel, PDCCH) monitoring capabilities in new radio (New Radio, NR) Rel-15.

In NR Rel-15, PDCCH monitoring capabilities may be classified into mandatory (Mandatory) capabilities and optional (Optional) capabilities.

Capabilities mandatory without capability signaling (Mandatory without capability signaling) are as follows:
(1) Control resource set (Control Resource Set, CORESET): Each bandwidth part (BandWidth Part, BWP) of each cell (Cell) can be configured with one additional CORESET based on CORESET 0.

Frequency range 1 (Frequency Range 1, FR1): Bitmap (bitmap) of 6 radio bearers (Radio Bearer, RB) + 1 to 3 symbols.

Frequency range 2 (Frequency Range 2, FR2): Bitmap of 6 RBs + 1 to 3 symbols for type (Type) 0, 0A, or 2 common search space (Common Search Space, CSS), and type 1 configured by non-dedicated radio resource control (Radio Resource Control, RRC) signalling; and Bitmap of 6 RBs + 1 or 2 symbols for type 1, type 3, and UE-specific search space (UE-specific Search Space, USS) that are configured by dedicated RRC signalling.

Resource element group bundle size (REG bundle size): 2/3/6.

Interleaved and non-interleaved control channel element to resource element group mapping (Interleaved and non-interleaved CCE to REG mapping).

Setting a precoder granularity size (precoder granularity size) to a REG bundle size is supported.

Dedicated demodulation reference signal (Dedicated demodulation reference signal, DMRS) scrambling is supported.

Configuring one or more transmission configuration indication states (TCI states) is supported.

### (2) Unicast PDCCH transmission in CSS and USS (Unicast PDCCH transmission in CSS and USS).

Aggregation levels (Aggregation Level, AL) 1, 2, 4, 8, and 16.

For a scheduled secondary cell (Secondary Cell, SCell), each BWP has a maximum of three search space groups (SS sets) per slot (slot) (defined based on a scheduling cell), and this limit is used before dropping of a search space (Search Space, SS).

For type 1, type 3, and USS that are configured by dedicated RRC, monitoring occasions (Monitoring occasions) are at first three symbols of a slot.

For type 0, 0A, or 2 CSS, and type 1 configured by non-dedicated RRC, monitoring occasions may be at any symbol of a slot, and in a single span (single span) of a slot (three consecutive orthogonal frequency division multiplexing (Orthogonal Frequency Division Multiplexing, OFDM) symbols).

(3) Monitoring of downlink control information (Downlink Control Information, DCI) 0_0, 0_1, 1_0, and 1_1 is supported.

(4) In a frequency division duplex (Frequency Division Duplex, FDD) system, for each scheduled component carrier (Component Carrier, CC), only one piece of DCI for scheduling DL unicast transmission and one piece of DCI for scheduling UL unicast transmission are processed per slot (slot).

(5) In a time division duplex (Time Division Duplex, TDD) system, for each scheduled CC, only one piece of DCI for scheduling DL unicast transmission and two pieces of DCI for scheduling UL unicast transmission are processed per slot.

Capabilities mandatory with capability signaling (Mandatory with capability signaling) are as follows:
CORESET in FR2.

Bitmap of 6 RBs + 3 symbols for type 1, type 3, and USS that are configured by dedicated RRC.

The optional capabilities are as follows:
(1) pdcchMonitoringSingleOccasion.
   FR1: It indicates that UE supports receiving a PDCCH scrambled by a cell radio network temporary identifier (Cell Radio Network Temporary Identifier, C-RNTI) and a configured scheduling radio network temporary identifier (Configured Scheduling Radio Network Temporary Identifier, CS-RNTI) at any three consecutive symbols in a 15 kilohertz (kHz) slot.
(2) pdcch-MonitoringAnyOccasions.
   withoutDCI-gap: For type 1, type 3, and USS that are configured by dedicated RRC, monitoring occasions are at any symbol in a slot and comply with a restriction of a blind decoding (Blind Decoding, BD) budget.
   withDCI-gap: For type 1, type 3, and USS that are configured by dedicated RRC, monitoring occasions are at any symbol in a slot, but a gap (gap) restriction needs to be satisfied between consecutive PDCCHs scrambled by any two C-RNTIs, modulation and coding scheme (Modulation and Coding Scheme, MCS)-C-RNTIs, or CS-RNTIs: 15 kHz corresponds to 2 symbols (2 symbols for 15 kHz), 30 kHz corresponds to 4 symbols (4 symbols for 30 kHz), (60 kHz, NCP) corresponds to 7 symbols (7 symbols for (60 kHz, NCP)), and 120 kHz corresponds to 14 symbols (14 symbols for 120 kHz). In addition, the monitoring occasions comply with the restriction of the BD budget.
(3) pdcch-MonitoringAnyOccasionsWithSpanGap.

A span pattern (span pattern) is determined based on (X, Y) values of a UE report (UE reporting) configured based on all SS monitoring occasions.

A span pattern of each slot is the same.

A start position of a first span of the span pattern is a position of a first monitoring occasion of any slot. A span length is max{maximum value of all CORESET durations (maximum value of all CORESET durations), minimum value of Y in the UE reported candidate value (minimum value of Y in the UE reported candidate value)}, and a length of a last span may be shorter. A start position of a next span is a first position of a monitoring occasion that is not included in a previous span.

Whether the span pattern satisfies a (X, Y) restriction of at least one reporting is checked.

### 2. PDCCH monitoring capabilities in NR Rel-16.

In NR Rel-16, all PDCCH monitoring capabilities are optional capabilities as follows:
pdcch-Monitoring-r16: Different from those in Rel-15, supported span values (value) can be reported per physical downlink shared channel processing type (Per PDSCH processing type) and per subcarrier spacing (Per SCS), and each span complies with a corresponding BD or control channel element (Control Channel Element, CCE) restriction.
pdcch-MonitoringMixed-r16: Different PDCCH monitoring capability (pdcch monitoring capability) configurations are supported for different serving cells.
pdcch-MonitoringCA-r16: UE report pdcch-Monitoring-r16, for configuring a maximum quantity of monitoring cells (monitoring cells) in per-span BD and CCE restrictions, and indicating support for alignment (aligned) of a span arrangement (span arrangement).

The following describes in detail the embodiments of this application by using some embodiments and application scenarios thereof with reference to the accompanying drawings.

FIG. 2 is a first flowchart of a PDCCH monitoring method according to an embodiment of this application. The PDCCH monitoring method in FIG. 2 may be performed by a terminal. As shown in FIG. 2, the PDCCH monitoring method may include the following steps.

Step 201: A terminal receives first information, where the first information includes at least one of the following: a search space configuration and a PDCCH monitoring capability configuration.

In a specific implementation, a network-side device may send the first information to the terminal to configure a SS of the terminal through the search space configuration and/or configure a PDCCH monitoring capability corresponding to each search space group of the terminal through the PDCCH monitoring capability configuration. A PDCCH monitoring capability corresponding to a search space group may be understood as a PDCCH monitoring capability of the terminal in the search space group.

Step 202: The terminal determines, based on the first information, PDCCH monitoring capabilities corresponding to R search space groups of the terminal, where R is a positive integer.

In a specific implementation, in a case that the first information includes the PDCCH monitoring capability configuration, the PDCCH monitoring capabilities corresponding to the R search space groups may be determined based on the PDCCH monitoring capability configuration.

In a case that the first information does not include the PDCCH monitoring capability configuration, the PDCCH monitoring capabilities corresponding to the R search space groups may be predefined by a protocol.

All search spaces of the terminal correspond to the R search space groups, and a specific representation is: each of the R search space groups may include part or all of all search spaces of the terminal, and at least one search space among different search spaces of the R search space groups is different. Search spaces included in each search space group may be predefined by a protocol or configured by the network-side device.

Each of the R search space groups may correspond to at least one search space type, and search space types corresponding to different search space groups may be different or the same. The types of the search spaces may include CSS and USS. Further, the CSS may be further classified into at least one of the following: type 0, 0A, or 2 CSS, and type 1 CSS configured by non-dedicated RRC. The USS may be further classified into type 1, type 3, and USS that are configured by dedicated RRC.

Optionally, the PDCCH monitoring capabilities corresponding to the R search space groups may include at least one of the following:
a multi-slot-based PDCCH monitoring capability, that is, the PDCCH monitoring capability may be defined based on a multi-slot granularity;
a slot-based PDCCH monitoring capability, that is, the PDCCH monitoring capability may be defined based on a single-slot granularity; and
a PDCCH monitoring capability based on a symbol level span (symbol level span), that is, the PDCCH monitoring capability may be defined based on a granularity of the symbol level span.

It may be understood that all the PDCCH monitoring capabilities corresponding to the R search space groups are PDCCH monitoring capabilities supported by the terminal; and the PDCCH monitoring capabilities corresponding to the R search space groups may be the same or different, which may be specifically determined based on an actual situation and is not limited in this embodiment of this application. One search space group corresponds to one PDCCH monitoring capability, and for a PDCCH monitoring capability corresponding to a search space group, all search spaces in the search space group correspond to the PDCCH monitoring capability.

In an implementation, the support for the multi-slot-based PDCCH monitoring capability may be specifically represented by:
support for a PDCCH monitoring capability based on a slot group; and
support for a PDCCH monitoring capability based on a slot level span (slot level span).

In other words, in this embodiment of this application, the PDCCH monitoring capability may be defined based on a granularity of the slot group or a granularity of the slot level span. A single slot group may include at least two slots; and a single slot level span may include a plurality of slots. In an actual application, a quantity of slots included in a single slot group and/or a quantity of slots included in a single slot level span may be reported by the terminal, configured by the network-side device, or predefined by a protocol, which may be determined based on an actual situation and is not limited in this embodiment of this application.

Step 203: The terminal monitors PDCCHs of N cell groups of the terminal based on the PDCCH monitoring capabilities corresponding to the R search space groups.

All cells of the terminal correspond to the N cell groups, and a specific representation may be: each of the N cell groups may include part or all of all the cells of the terminal, and at least one cell among different cells of the cell group is different. Cells included in each cell group may be predefined by a protocol or configured by the network-side device.

At least one of the R search space groups may be configured for the N cell groups. Search space groups configured for different cell groups may be the same or different, which may be specifically determined based on an actual situation and is not limited in this embodiment of this application.

In a specific implementation, for each cell group, a PDCCH of the cell group may be monitored based on a PDCCH monitoring capability corresponding to a search space group configured for the cell group.

In the PDCCH monitoring method in this application, the terminal can map the R search space group to the N cell groups, and the terminal can determine the PDCCH monitoring capabilities corresponding to the R search space groups, to monitor the PDCCHs of the N cell groups of the terminal. As can be learned, this application can define various types of PDCCH monitoring capabilities by using a search space group as a granularity, thereby improving flexibility of the search space configuration.

In this embodiment of this application, optionally, the N cell groups may include at least one of the following:
a first cell group, where all cells included in the first cell group are serving cells or scheduling cells;
a second cell group, where the second cell group includes only a single serving cell or a single scheduling cell; and
a third cell group, where cells included in the third cell group satisfy a first condition.

Optionally, the first condition includes at least one of the following:
the cells are scheduling cells;
subcarrier spacings SCSs of the cells are the same;
PDCCH monitoring capabilities corresponding to the cells are the same; and
the cells belong to a same dual-connectivity (Dual connectivity, DC) cell group, for example, a master cell group (Master Cell Group, MCG) or a secondary cell group (Secondary Cell Group, SCG).

It should be noted that, in an implementation, a cell corresponding to the PDCCH monitoring capability based on the slot group and a cell corresponding to and supporting the PDCCH monitoring capability based on the slot level span may be considered as corresponding to the same PDCCH monitoring capability. In another implementation, a cell corresponding to the PDCCH monitoring capability based on the slot group and a cell corresponding to and supporting the PDCCH monitoring capability based on the slot level span may be considered as corresponding to different PDCCH monitoring capabilities.

That SCSs of the cells are the same may include: SCSs of active BWPs of the cells are the same; and/or SCSs of default BWPs of the cells are the same.

In this embodiment of this application, optionally, search spaces include P common search space types and Q UE-specific search space types, where P and Q are both integers greater than 1; and
the R search space groups may include at least one of the following:
a first search space group, where the first search space group corresponds to the P common search space types and the Q UE-specific search space types, that is, the first search space group corresponds to all search space types;
a second search space group, where the second search space group corresponds to all or part of the P common search space types, that is, the second search space group corresponds to part or all of CSS types;
a third search space group, where the third search space group corresponds to all or part of the Q UE-specific search space types, that is, the third search space group corresponds to part or all of USS types; and
a fourth search space group, where the fourth search space group corresponds to all or part of the P common search space types and all or part of the Q UE-specific search space types, that is, the fourth search space group corresponds to part or all of CSS types and part or all of CSS types.

That the search space group corresponds to a search space type may be understood as "the search space group includes a search space of the search space type."

In this embodiment of this application, before receiving the first information, the terminal may report PDCCH monitoring capability information supported by the terminal to the network-side device, so that the network-side device performs the search space configuration and/or PDCCH monitoring capability configuration for the terminal based on the PDCCH monitoring capability information supported by the terminal, thereby increasing a probability that the R search space groups comply with the PDCCH monitoring capability of the terminal. Detailed descriptions are as follows:

Optionally, before the terminal receives the first information, the method may further include:
the terminal sends second information, where the second information is used to indicate PDCCH monitoring capability information of the terminal.

Optionally, the PDCCH monitoring capability information may include at least one of the following:
first sub-information, used to indicate whether a target search space group supports a PDCCH monitoring capability based on a slot group;
second sub-information, used to indicate whether the target search space group supports a PDCCH monitoring capability based on a slot level span;
third sub-information, used to indicate at least one of the following: a quantity of cells in which the target search space group supports the PDCCH monitoring capability based on the slot group and a quantity of cells in which the target search space group supports the PDCCH monitoring capability based on the slot level span; and
fourth sub-information, used to indicate whether a target cell supports any one of the following: the PDCCH monitoring capability based on the slot group, the PDCCH monitoring capability based on the slot level span, and a PDCCH monitoring capability corresponding to a first version, where the PDCCH monitoring capability corresponding to the first version is the PDCCH monitoring capability based on the slot group or the PDCCH monitoring capability based on the slot level span, and the target cell is any cell in a cell set, where
the target search space group is a target search space group among the R search space groups.

In this embodiment of this application, when indicating the PDCCH monitoring capability information of the terminal, the terminal may provide the indication by using the search space group as a granularity, thereby improving flexibility of the search space configuration.

The first version may be Release 17 or later.

Optionally, in a case that the first sub-information indicates that the target search space group supports the PDCCH monitoring capability based on the slot group, the PDCCH monitoring capability information of the target search space group further includes at least one of the following:
a quantity X1 of slots included in the slot group;
a time offset O1 of a start slot of the slot group; and
a quantity Y1 of configurable PDCCH monitoring occasions in the slot group.

Optionally, in a case that the second sub-information indicates that the target search space group supports the PDCCH monitoring capability based on the slot level span, the PDCCH monitoring capability information of the target search space group further includes at least one of the following:
a minimum quantity X2 of slots between consecutive slot level spans;
a maximum quantity Y2 of consecutive slots in the slot level span;
a quantity M of slots included in a unit time corresponding to the slot level span; and
a time offset O1 of the unit time corresponding to the slot level span.

Because the terminal indicates the PDCCH monitoring capability information by using the search space group as the granularity, optionally, the PDCCH monitoring capability information corresponding to the R search space groups is the same or different. To be specific, PDCCH monitoring capability information of different search space groups may be the same or different, and a specific representation may be: at least one of the foregoing X1, O1, and Y1 is the same or different, and/or at least one of the foregoing X2, Y2, M, and O1 is the same or different.

The following describes a restriction on a time domain position of a PDCCH monitoring occasion.

First, a restriction on a slot in which the PDCCH monitoring occasion is located is described.

In this embodiment of this application, the restriction on the slot in which the PDCCH monitoring occasion is located may be determined by using the search space group as the granularity, thereby improving flexibility of the search space configuration. It may be understood that restrictions on slots in which PDCCH monitoring occasions of different search space groups are located may be the same or different.

Optionally, in a case that a target search space group corresponds to a PDCCH monitoring capability based on a slot group, a slot in which a monitoring occasion of the target search space group is located satisfies a second condition, and the second condition includes at least one of the following:
within first Y1 slots of the slot group;
within Y1 consecutive slots of the slot group; and
a quantity of slots in the slot group is not greater than Y1, where
the target search space group is one of the R search space groups, and Y1 is a quantity of configurable PDCCH monitoring occasions in the slot group.

In a case that the target search space group corresponds to the PDCCH monitoring capability based on the slot group, for the target search space group, a target cell group corresponding to the target search space group may be determined first, and then a target slot corresponding to the target cell group may be determined, where the target slot is configured with a PDCCH monitoring occasion. In a case that the target cell group includes at least two cells, the target slot corresponding to the target cell group may be: a set of target slots corresponding to each cell in the target cell group.

For the determined target slot corresponding to the target cell group, a position of the slot group may be determined based on X1 and/or O1, and the slot in which the monitoring occasion of the target search space group is located satisfies at least one of the following:
within first Y1 slots of the determined slot group;
within Y1 consecutive slots of the determined slot group; and
a quantity of slots in the determined slot group is not greater than Y1.

Optionally, in a case that the R search space groups include at least two search space groups corresponding to the PDCCH monitoring capability based on the slot group, slots in which monitoring occasions of the at least two search space groups are located satisfy a same second condition or different second conditions. In other words, restrictions on slots in which PDCCH monitoring occasions of different search space groups are located may be the same or different, and a specific representation may be: Y1 in the second condition may be the same or different.

Optionally, in a case that a target search space group corresponds to a PDCCH monitoring capability based on a slot level span and that a pattern of the slot level span is determined based on a first rule, a slot in which a monitoring occasion of the target search space group is located satisfies a third condition, and the third condition includes:
a distance between start slots of consecutive slot level spans is not less than X2 slots, where
the target search space group is one of the R search space groups, and X2 is a minimum quantity of slots between consecutive slot level spans.

In a case that the target search space group corresponds to the PDCCH monitoring capability based on the slot level span, a slot level span pattern, that is, a slot granularity span pattern, may be determined based on a slot position in which a PDCCH monitoring occasion of the target search space group is located and the first rule. In this case, a slot in which the monitoring occasion of the target search space group is located satisfies: the distance between the start slots of any consecutive slot level spans is not less than X2 slots.

Optionally, in a case that the R search space groups include at least two search space groups corresponding to the PDCCH monitoring capability based on the slot level span, slots in which monitoring occasions of the at least two search space groups are located satisfy a same third condition or different third conditions. In other words, restrictions on slots in which PDCCH monitoring occasions of different search space groups are located may be the same or different, and a specific representation may be: X2 in the third condition may be the same or different.

Optionally, in a case that the slot level span corresponds to Q unit times and that Q is an integer greater than 1, the first rule includes at least one of the following:
rule 1: within a first unit time, a start position of a first slot level span is a first slot within the first unit time, the first slot is a first slot configured with a PDCCH monitoring occasion within the first unit time, a start position of an (i+1)-th slot level span is a second slot, the second slot is configured with a PDCCH monitoring occasion and is different from a first slot of an i-th slot level span, and a maximum length of the slot level span is Y slots; and
rule 2: within the first unit time, the start position of the first slot level span is a third slot within the first unit time, an index of the third slot is the same as an index of a fourth slot, the fourth slot is a slot with a smallest index among slots configured with PDCCH monitoring occasions within the Q unit times, the start position of the (i+1)-th slot level span is the second slot, the second slot is configured with a PDCCH monitoring occasion and is different from the first slot of the i-th slot level, and the maximum length of the slot level span is Y slots, where
the first unit time is any one of the Q unit times, and i is a positive integer.

In rule 1, because the start position of the first slot level span within each unit time is the first slot configured with a PDCCH monitoring occasion within the unit time, that is, the first slot within the unit time, slot granularity span patterns of different unit times among the Q unit times may be the same or different, which is specifically determined based on the first slot of each unit time. For any two unit times, if first slots of the two unit times are different, slot granularity span patterns of the two unit times are different; or if first slots of the two unit times are the same, slot granularity span patterns of the two unit times may be the same.

In rule 2, because the start position of the first slot level span within each unit time is a slot having a same index as the fourth slot, the start position of the first slot level span within each unit time is the same. Therefore, slot granularity span patterns of different unit times among the Q unit times are the same, that is, the slot granularity span pattern is repeated within each of the Q unit times.

Next, a restriction on a symbol at which a PDCCH monitoring occasion is located is described.

In this embodiment of this application, the restriction on the symbol in which the PDCCH monitoring occasion is located may be determined by using the search space group as the granularity, thereby improving flexibility of the search space configuration. It may be understood that restrictions on symbols in which PDCCH monitoring occasions of different search space groups are located may be the same or different.

In addition, the symbol at which the PDCCH monitoring occasion of the search space group is located may be restricted by using a single symbol as a granularity or using a single symbol level span as a granularity. For different granularities, the symbol at which the PDCCH monitoring occasion is located may meet different conditions. Detailed descriptions are as follows:

Optionally, a symbol at which a monitoring occasion of a target search space group is located satisfies a fourth condition, and the fourth condition includes at least one of the following:
within first Y' symbols of a slot;
within Y' consecutive symbols of the slot; and
a quantity of symbols in the slot is not greater than Y', where
the target search space group is one of the R search space groups, Y' is a positive integer, and Y' may be reported by the terminal, configured by the network-side device, or predefined by a protocol.

In this case, the symbol at which the PDCCH monitoring occasion of the search space group is located is restricted by using a single symbol as a granularity. The slot in the fourth condition may be understood as any slot among target slots corresponding to the target search space group.

Optionally, slots in which the R search space groups are located satisfy a same fourth condition or different fourth conditions. In other words, restrictions on symbols at which PDCCH monitoring occasions of different search space groups are located may be the same or different, and a specific representation may be: Y' in the fourth condition may be the same or different.

Optionally, in a case that a pattern of a symbol level span is determined based on a second rule, a symbol at which a monitoring occasion of a target search space group is located satisfies a fifth condition, and the fifth condition includes:
a distance between start symbols of consecutive symbol level spans is not less than X' symbols, where
the target search space group is one of the R search space groups, X' is a positive integer, and X' may be reported by the terminal, configured by the network-side device, or predefined by a protocol.

In this case, the symbol at which the PDCCH monitoring occasion of the search space group is located is restricted by using a single symbol level span as a granularity. A symbol level span pattern, that is, a symbol granularity span pattern, may be determined based on the symbol at which the PDCCH monitoring occasion of the target search space group is located and the second rule. In this case, the symbol at which the PDCCH monitoring occasion of the target search space group is located may satisfy: a distance between start symbols of any consecutive symbol level spans is not less than X' symbols.

Optionally, slots in which the R search space groups are located satisfy a same fifth condition or different fifth conditions. In other words, restrictions on symbols at which PDCCH monitoring occasions of different search space groups are located may be the same or different, and a specific representation may be: X' in the fifth condition may be the same or different.

Optionally, in a case that the symbol level span corresponds to K unit times and that K is an integer greater than 1, the second rule includes at least one of the following:
rule 3: within a second unit time, a start position of a first symbol level span is a first symbol within the second unit time, the first symbol is a first symbol configured with a PDCCH monitoring occasion within the second unit time, a start position of an (i+1)-th symbol level span is a second symbol, the second symbol is configured with a PDCCH monitoring occasion and is different from a first symbol of an i-th symbol level span, and a maximum length of the symbol level span is Y symbols; and
rule 4: within the second unit time, the start position of the first symbol level span is a third symbol within the first unit time, an index of the third symbol is the same as an index of a fourth symbol, the fourth symbol is a symbol with a smallest index among symbols configured with PDCCH monitoring occasions within the K unit times, the start position of the (i+1)-th symbol level span is the second symbol, the second symbol is configured with a PDCCH monitoring occasion and is different from the first symbol of the i-th symbol level, and the maximum length of the symbol level span is Y symbols, where
the second unit time is any one of the K unit times, and i is a positive integer.

In rule 3, because the start position of the first symbol level span within each unit time is the first symbol configured with a PDCCH monitoring occasion within the unit time, that is, the first symbol within the unit time, symbol granularity span patterns of different unit times among the Q unit times may be the same or different, which is specifically determined based on the first symbol of each unit time. For any two unit times, if first symbols of the two unit times are different, symbol granularity span patterns of the two time units are different; or if first symbols of the two unit times are the same, symbol granularity span patterns of the two time units may be the same.

In rule 4, because the start position of the first symbol level span within each unit time is a symbol having a same index as the fourth symbol, the start position of the first symbol level span within each unit time is the same. Therefore, symbol granularity span patterns of different unit times among the Q unit times are the same, that is, the symbol granularity span pattern is repeated within each of the Q unit times.

The following describes a restriction on PDCCH processing parameters corresponding to a search space group.

Optionally, PDCCH processing parameters corresponding to the R search space groups satisfy at least one of the following:
determining manner 1: the PDCCH processing parameters corresponding to the R search space groups are determined based on a PDCCH monitoring capability corresponding to a reference search space group; and
determining manner 2: the PDCCH processing parameters corresponding to the R search space groups are determined independently.

In determining manner 1, one search space group may be selected from the R search space groups as the reference search space group, and then, based on the PDCCH monitoring capability corresponding to the reference search space group, a manner of calculating the PDCCH processing parameters corresponding to the R search space groups is determined.

For determining manner 1, optionally, PDCCH processing parameters corresponding to a target search space group satisfy at least one of the following:
(i) in a case that the reference search space group corresponds to a PDCCH monitoring capability based on a slot group, the PDCCH processing parameters corresponding to the target search space group are calculated based on a first slot group, where the first slot group is a slot group of the reference search space group; and
(ii) in a case that the reference search space group corresponds to a PDCCH monitoring capability based on a slot level span, the PDCCH processing parameters corresponding to the target search space group are calculated based on a second slot group, where the second slot group is determined based on a pattern of the slot level span.

In this optional implementation, for different representations of multi-slot-based PDCCH monitoring capabilities, the PDCCH processing parameters corresponding to the target search space group are calculated in different manners.

In (i), when a restriction on the PDCCH processing parameters corresponding to the target search space group is determined, the slot group of the reference search space group is used as a granularity to count the PDCCH processing parameters corresponding to the target search space group in the slot group of each reference search space group. The PDCCH processing parameters corresponding to the target search space group in the slot group of each reference search space group comply with a first restriction on the PDCCH processing parameters.

In (ii), when the restriction on the PDCCH processing parameters corresponding to the target search space group is determined, the second slot group is first determined based on a slot granularity span pattern, and then the second slot group is used as a granularity to count the PDCCH processing parameters corresponding to the target search space group in each second slot group. The PDCCH processing parameters corresponding to the target search space group in each second slot group comply with a first restriction on the PDCCH processing parameters.

Optionally, the second slot group satisfies:
a start slot is a start slot of an i-th slot level span; and
an end slot is a slot previous to a start slot of an (i+1)-th slot level span, where
i is a positive integer.

In this embodiment of this application, the first restriction may be reported by the terminal, configured by the network-side device, or predefined by a protocol. In a specific implementation, the first restriction may be represented by a target value.

In a case that the PDCCH processing parameters are represented by BD quantities, a sum of PDCCH processing parameters of each slot group complies with the first restriction on the PDCCH processing parameters, and a representation may be: a sum of BD quantities of each slot group of each cell group is less than or equal to the target value.

In a case that the PDCCH processing parameters are represented by quantities of CCEs, a sum of PDCCH processing parameters of each slot group of each cell group complies with the first restriction on the PDCCH processing parameters, and a representation may be: a sum of quantities of CCEs of each slot group of each cell group is less than or equal to the target value.

For determining manner 2, the PDCCH processing parameters corresponding to the R search space groups are determined independently. In a specific implementation, the PDCCH processing parameters corresponding to each search space group may be determined based on the PDCCH monitoring capability corresponding to the search space group. In this manner, there may be separate PDCCH processing parameter restrictions for different search space groups.

When the restriction on the PDCCH processing parameters corresponding to the target search space group is determined, the slot group of the target search space group is used as a granularity to count the PDCCH processing parameters corresponding to the target search space group in the slot group of each target search space group. The PDCCH processing parameters corresponding to the target search space group in the slot group of each target search space group comply with the first restriction on the PDCCH processing parameters.

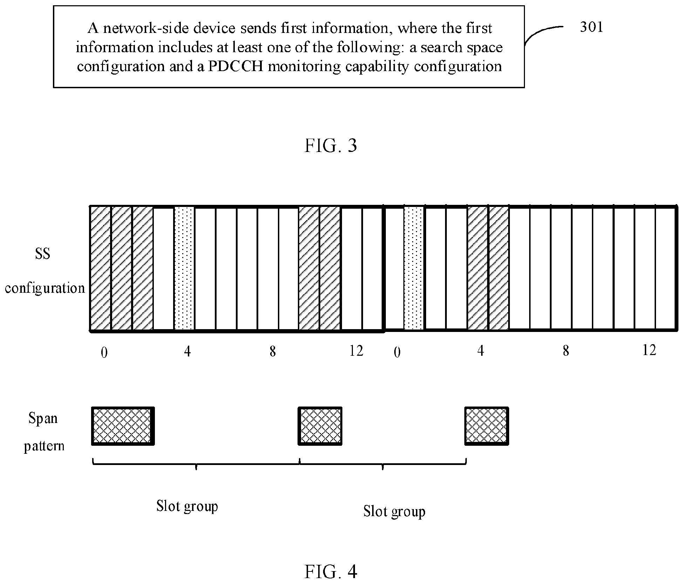

FIG. 3 is a second flowchart of a PDCCH monitoring method according to an embodiment of this application. The PDCCH monitoring method in FIG. 3 is performed by a network-side device. As shown in FIG. 3, the PDCCH monitoring method may include the following step.

Step 301: A network-side device sends first information, where the first information includes at least one of the following: a search space configuration and a PDCCH monitoring capability configuration.

Optionally, before the network-side device sends the first information, the method further includes:
the network-side device receives second information, where the second information is used to indicate PDCCH monitoring capability information corresponding to R search space groups.

Optionally, PDCCH monitoring capability information of a target search space group includes at least one of the following:
first sub-information, used to indicate whether the target search space group supports a PDCCH monitoring capability based on a slot group;
second sub-information, used to indicate whether the target search space group supports a PDCCH monitoring capability based on a slot level span;
third sub-information, used to indicate at least one of the following: a quantity of cells in which the target search space group supports the PDCCH monitoring capability based on the slot group and a quantity of cells in which the target search space group supports the PDCCH monitoring capability based on the slot level span; and
fourth sub-information, used to indicate whether a target cell supports any one of the following: the PDCCH monitoring capability based on the slot group, the PDCCH monitoring capability based on the slot level span, and a PDCCH monitoring capability corresponding to a first version, where the PDCCH monitoring capability corresponding to the first version is the PDCCH monitoring capability based on the slot group or the PDCCH monitoring capability based on the slot level span, and the target cell is any cell in a cell set, where
the target search space group is a target search space group among the R search space groups.

Optionally, in a case that the first sub-information indicates that the target search space group supports the PDCCH monitoring capability based on the slot group, the PDCCH monitoring capability information of the target search space group further includes at least one of the following:
a quantity X1 of slots included in the slot group;
a time offset O1 of a start slot of the slot group; and
a quantity Y1 of configurable PDCCH monitoring occasions in the slot group.

Optionally, in a case that the second sub-information indicates that the target search space group supports the PDCCH monitoring capability based on the slot level span, the PDCCH monitoring capability information of the target search space group further includes at least one of the following:
a minimum quantity X2 of slots between consecutive slot level spans;
a maximum quantity Y2 of consecutive slots in the slot level span;
a quantity M of slots included in a unit time corresponding to the slot level span; and
a time offset O1 of the unit time corresponding to the slot level span.

Optionally, the PDCCH monitoring capability information corresponding to the R search space groups is the same or different.

It should be noted that this embodiment serves as an embodiment of the network-side device corresponding to the method embodiment in FIG. 2. Therefore, reference can be made to the related description in the method embodiment in FIG. 2, and the same beneficial effect can be achieved. To avoid repetition, details are not described herein again.

It should be noted that various optional implementations described in this embodiment of this application may be implemented in combination or may be implemented independently. This is not limited in this embodiment of this application.

For ease of understanding, the following uses an example for description.

In this example, a terminal may perform at least one of the following:
1. reporting or predefining PDCCH monitoring capability information;
2.receiving PDCCH configuration information from a base station, where the PDCCH configuration information includes a search space configuration and/or a PDCCH monitoring capability configuration; and
3.performing PDCCH monitoring based on a search space configured by the base station, where the search space configured by the base station complies with a PDCCH monitoring capability of the terminal, that is, for at least one first cell group in a first cell group set (one or more first cell groups) and at least one first search space group in a first search space group set (one or more first search space groups), determining that a PDCCH monitoring occasion of the first search space group configured in the first cell group satisfies a corresponding first condition, where
   the first cell group is all or part of all serving cells configured for the terminal, the first search space group is all or part of all search spaces, and the first condition includes at least one of the following:
   a slot in which the PDCCH monitoring occasion is located satisfies a second condition;
   a symbol at which the PDCCH monitoring occasion is located satisfies a third condition; and
   PDCCH monitoring capability parameters (such as a quantity of blind detections or a quantity of CCEs) satisfy a fourth condition.

The first cell group set includes one or more of the following cell groups:
a cell group including all serving cells or all scheduling serving cells that are configured;
a cell group including a single serving cell or scheduling serving cell that is configured; and
a cell group satisfying at least one of the following conditions:
   configured as a scheduling cell;
   having a same SCS, where the SCS is an SCS of an active BWP or a default BWP of a serving cell;
   having a same PDCCH monitoring capability type or version configured by the base station; and
   belonging to a same cell group (MCG or SCG) in a dual-connectivity (DC) configuration.

The first search space group set includes one or more of the following search space groups:
all search space types;
one or more common search spaces of a specific type (for example, type 0, 0A, or 2 CSS and type 1 CSS configured by non-dedicated RRC);
one or more UE-specific search spaces of a specific type; and
one or more common search spaces of a specific type and one or more UE-specific search spaces of a specific type (for example, type 1, type 3 CSS, and USS configured by dedicated RRC).

The PDCCH monitoring capability information may include one or more of the following:
whether to support a PDCCH monitoring capability based on a fixed slot group, and if yes, including one or more of the following:
   - a size X of the fixed slot group;
   - a time offset O of a start slot of the fixed slot group; and
   - a quantity Y of configurable PDCCH monitoring occasions in the fixed slot group;
whether to support a PDCCH monitoring capability based on a slot granularity span, and if yes, including one or more of the following:
   - a minimum quantity X of slots between consecutive spans based on a slot granularity;
   - a maximum quantity Y of consecutive slots based on the slot granularity span;
   - a quantity M of slots included in a unit time based on the slot granularity span; and
   - a time offset O of the unit time based on the slot granularity span;
a quantity of cells that support the PDCCH monitoring capability based on the fixed slot group or the slot granularity span; and
whether a specific cell supports Release 17 or the PDCCH monitoring capability based on the fixed slot group or the slot granularity span.

The second condition is as follows:
(a) One or more slots slot configured with a PDCCH monitoring occasion of the first search space group in the first cell group is determined.
   i. If the first cell group includes a plurality of cells, slots with PDCCH monitoring occasions determined in each cell are aggregated.
(b) If the PDCCH monitoring capability is based on the fixed slot group, a position of the slot group is determined based on X and/or O, and the second condition is one or more of the following:
   i. the slot determined in step a is within first Y slots of the determined slot group;
   ii. the slot determined in step a is within first Y consecutive slots of the determined slot group; and
   iii. a quantity of slots determined in step a within the determined slot group is not greater than Y.
(c) If the PDCCH monitoring capability is based on the slot granularity span, a slot granularity span pattern is determined based on the slot position determined in step a and one of the following rules, and the second condition is that a distance between start slots of any consecutive spans is not less than X slots:
   i. for each determined unit time, a start position of a first span is a first slot configured with PDCCH monitoring occassion within the unit time, where a maximum length of the span is Y slots; and a start position of a next span is a first slot configured with PDCCH monitoring occassion but not included in a previous span, where a maximum length of the span is Y slots; and
   ii. a start position of a first span is a first slot configured with PDCCH monitoring occassion within any unit time, where a maximum length of the span is Y slots; and a start position of a next span is a first slot configured with PDCCH monitoring occassion but not included in a previous span, where a maximum length of the span is Y slots, and the span pattern is repeated within every unit time, where
      the unit time is a predefined subframe or radio frame, or a unit time determined based on M and/or O.

The third condition is as follows:
(a) A symbol configured with a PDCCH monitoring occasion of the first search space group in the first cell group is determined.
   i. If the first cell group includes a plurality of cells, symbols with PDCCH monitoring occasions determined in each cell are aggregated.
(b) If he PDCCH monitoring capability is based on a specific position in a slot, the third condition is one or more of the following:
   i. all symbol positions determined in step a are within first Y' symbols of the slot;
   ii. all symbol positions determined in step a are within Y' consecutive symbols of the slot; and
   iii. a quantity of symbols determined in step a within one slot does not exceed Y'.
(c) If the PDCCH monitoring capability is defined based on a symbol level span, a symbol granularity span pattern is determined based on the symbol position determined in step a and one of the following rules, and the third condition is that a distance between start symbols of any consecutive symbol level spans is not less than X' symbols:
   i. for each determined unit time, a start position of a first span is a first symbol configured with PDCCH monitoring within the unit time, where a maximum length of the span is Y' symbols; and a start position of a next span is a first symbol configured with PDCCH monitoring occassion but not included in a previous span, where a maximum length of the span is Y' symbols; and
   ii. a start position of a first span is a first symbol configured with PDCCH monitoring occassion within any unit time, where a maximum length of the span is Y' symbols; and a start position of a next span is a first symbol configured with PDCCH monitoring occassion but not included in a previous span, where a maximum length of the span is Y' symbols, and the span pattern is repeated within every unit time, where
the unit time is a predefined slot or a span.

The fourth condition is as follows:
(a) A specific first search space group in the first search space group set is used as a reference search space group, and a PDCCH monitoring capability parameter restriction is calculated based on the PDCCH monitoring capability determined for the group.
   i. If the reference search space group uses a multi-slot PDCCH monitoring capability based on a (X, Y) slot group, PDCCH monitoring capability parameters are calculated based on the slot group of the search space group, that is, PDCCHs in all search space configurations in the slot group comply with the PDCCH monitoring capability parameter restriction.
   ii. If the reference search space group uses a multi-slot PDCCH monitoring capability based on a (X, Y) slot span, PDCCH monitoring capability parameters are calculated based on the slot group determined based on the slot span pattern. The slot group is a start slot of one span to a start slot (not inclusive) of a next span. In other words, PDCCHs in all search space configurations in the slot group comply with the PDCCH monitoring capability parameter restriction.
(b) The configured PDCCH monitoring capability parameters are processed separately for all search space groups in the first search space group set, that is, there are separate PDCCH monitoring capability parameter restrictions for different search space groups.

When the first search space groups are different, corresponding first conditions may be the same or different.

When the first search space groups are different, corresponding PDCCH monitoring capability information may be the same or different.

For different first search space groups, UE reports or the base station configures different PDCCH monitoring capability related parameters.

A network-side device may perform at least one of the following:
receiving PDCCH monitoring capability related parameters reported by the UE;
configuring PDCCH monitoring capability related parameters of each cell; and
performing a search space configuration based on the PDCCH monitoring capability.

### Embodiment 1

In this embodiment, a PDCCH monitoring method may include the following steps.
Step 1: UE reports PDCCH monitoring capability related values (X₁, Yi) for type 0, 0A, or 2 CSS and type 1 CSS configured by non-dedicated RRC, and PDCCH monitoring capability related values (X₂, Y₂) for type 1, type 3 CSS, and USS that are configured by dedicated RRC.
Step 2: The UE receives a search space configuration from a base station.

A slot configured with PDCCH monitoring occasions of type 0, 0A, or 2 CSS and type 1 CSS configured by non-dedicated RRC is determined, and a span pattern based on a slot granularity is determined based on (X₁, Y₁), where an interval between start slots of any consecutive spans is not less than X1 slots.

A slot configured with PDCCH monitoring occasions of type 1, type 3 CSS, and USS that are configured by dedicated RRC is determined, and a span pattern based on the slot granularity is determined based on (X₂, Y₂), where an interval between start slots of any consecutive spans is not less than X2 slots.

An advantage of this solution is that a CSS configuration does not limit USS configurations of multiple UEs.

Step 3: Determine a PDCCH monitoring capability parameter restriction.

Type 1, type 3 CSS, and USS that are configured by dedicated RRC are used as a reference search space group, the span pattern based on the slot granularity is determined based on (X₂, Y₂), and a BD/CCE budget is calculated. An original per span BD/CCE budget is expanded to a slot group between two consecutive spans, and BD/CCE checks are performed on PDCCHs in all search spaces in this slot group. Refer to FIG. 4.

The embodiments of this application include the following protection points:
the UE reports or predefines the PDCCH monitoring capability information;
the UE receives the PDCCH configuration information from the base station, where the PDCCH configuration information includes the search space configuration and/or the PDCCH monitoring capability configuration; and
the UE performs PDCCH monitoring based on the search space configured by the base station, where the search space configured by the base station complies with the PDCCH monitoring capability of the terminal, that is, for the at least one first cell group in the first cell group set (one or more first cell groups) and the at least one first search space group in the first search space group set (one or more first search space groups), the UE determines that the PDCCH monitoring occasion of the first search space group configured in the first cell group satisfies the corresponding first condition, where
the first cell group is all or part of all the serving cells configured for the terminal, the first search space group is all or part of all the search spaces, and the first condition includes at least one of the following:
   the slot in which the PDCCH monitoring occasion is located satisfies the second condition;
   the symbol at which the PDCCH monitoring occasion is located satisfies the third condition;

The PDCCH monitoring capability parameters (such as the quantity of blind detections or the quantity of CCEs) satisfy the fourth condition.

In addition, when the first search space groups are different, the corresponding PDCCH monitoring capability information and/or first condition may be the same or different.

It can be learned that in the embodiments of this application, at least one of the following may be performed by using the search space group as the granularity: defining the PDCCH monitoring capability, limiting the time domain position of the PDCCH monitoring occasion, and limiting the PDCCH processing parameters, thereby improving flexibility of the search space configuration.

It should be noted that the PDCCH monitoring method provided in the embodiments of this application may be performed by a PDCCH monitoring apparatus, or a control module configured to perform the PDCCH monitoring method in the PDCCH monitoring apparatus. A PDCCH monitoring apparatus provided in the embodiments of this application is described by assuming that the PDCCH monitoring method is performed by the PDCCH monitoring apparatus in the embodiments of this application.

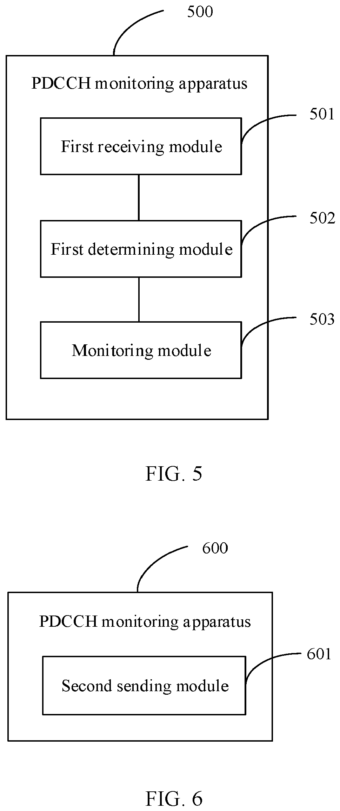

As shown in FIG. 5, a PDCCH monitoring apparatus 500 includes:
a first receiving module 501, configured to receive first information, where the first information includes at least one of the following: a search space configuration and a PDCCH monitoring capability configuration;
a first determining module 502, configured to determine, based on the first information, PDCCH monitoring capabilities corresponding to R search space groups of the terminal, where R is a positive integer; and
a monitoring module 503, configured to monitor PDCCHs of N cell groups of the terminal based on the PDCCH monitoring capabilities corresponding to the R search space groups.

Optionally, the N cell groups include at least one of the following:
a first cell group, where all cells included in the first cell group are serving cells or scheduling cells;
a second cell group, where the second cell group includes only a single serving cell or a single scheduling cell; and
a third cell group, where cells included in the third cell group satisfy a first condition.

Optionally, the first condition includes at least one of the following:
the cells are scheduling cells;
subcarrier spacings SCSs of the cells are the same;
PDCCH monitoring capabilities corresponding to the cells are the same; and
the cells belong to a same dual-connectivity cell group.

Optionally, search spaces include P common search space types and Q UE-specific search space types, where P and Q are both integers greater than 1; and
the R search space groups include at least one of the following:
a first search space group, where the first search space group corresponds to the P common search space types and the Q UE-specific search space types;
a second search space group, where the second search space group corresponds to all or part of the P common search space types;
a third search space group, where the third search space group corresponds to all or part of the Q UE-specific search space types; and
a fourth search space group, where the fourth search space group corresponds to all or part of the P common search space types and all or part of the Q UE-specific search space types.

Optionally, the PDCCH monitoring apparatus 500 further includes:
a first sending module, configured to send second information, where the second information is used to indicate PDCCH monitoring capability information corresponding to the R search space groups.

Optionally, PDCCH monitoring capability information of a target search space group includes at least one of the following:
first sub-information, used to indicate whether the target search space group supports a PDCCH monitoring capability based on a slot group;
second sub-information, used to indicate whether the target search space group supports a PDCCH monitoring capability based on a slot level span;
third sub-information, used to indicate at least one of the following: a quantity of cells in which the target search space group supports the PDCCH monitoring capability based on the slot group and a quantity of cells in which the target search space group supports the PDCCH monitoring capability based on the slot level span; and
fourth sub-information, used to indicate whether a target cell supports any one of the following: the PDCCH monitoring capability based on the slot group, the PDCCH monitoring capability based on the slot level span, and a PDCCH monitoring capability corresponding to a first version, where the PDCCH monitoring capability corresponding to the first version is the PDCCH monitoring capability based on the slot group or the PDCCH monitoring capability based on the slot level span, and the target cell is any cell in a cell set, where
the target search space group is a target search space group among the R search space groups.

Optionally, in a case that the first sub-information indicates that the target search space group supports the PDCCH monitoring capability based on the slot group, the PDCCH monitoring capability information of the target search space group further includes at least one of the following:
a quantity X1 of slots included in the slot group;
a time offset O1 of a start slot of the slot group; and
a quantity Y1 of configurable PDCCH monitoring occasions in the slot group.

Optionally, in a case that the second sub-information indicates that the target search space group supports the PDCCH monitoring capability based on the slot level span, the PDCCH monitoring capability information of the target search space group further includes at least one of the following:
a minimum quantity X2 of slots between consecutive slot level spans;
a maximum quantity Y2 of consecutive slots in the slot level span;
a quantity M of slots included in a unit time corresponding to the slot level span; and
a time offset O1 of the unit time corresponding to the slot level span.

Optionally, the PDCCH monitoring capability information corresponding to the R search space groups is the same or different.

Optionally, in a case that a target search space group corresponds to a PDCCH monitoring capability based on a slot group, a slot in which a monitoring occasion of the target search space group is located satisfies a second condition, and the second condition includes at least one of the following:
within first Y1 slots of the slot group;
within Y1 consecutive slots of the slot group; and
a quantity of slots in the slot group is not greater than Y1, where
the target search space group is one of the R search space groups, and Y1 is a quantity of configurable PDCCH monitoring occasions in the slot group.

Optionally, in a case that the R search space groups include at least two search space groups corresponding to the PDCCH monitoring capability based on the slot group, slots in which monitoring occasions of the at least two search space groups are located satisfy a same second condition or different second conditions.

Optionally, in a case that a target search space group corresponds to a PDCCH monitoring capability based on a slot level span and that a pattern of the slot level span is determined based on a first rule, a slot in which a monitoring occasion of the target search space group is located satisfies a third condition, and the third condition includes:
a distance between start slots of consecutive slot level spans is not less than X2 slots, where
the target search space group is one of the R search space groups, and X2 is a minimum quantity of slots between consecutive slot level spans.

Optionally, in a case that the R search space groups include at least two search space groups corresponding to the PDCCH monitoring capability based on the slot level span, slots in which monitoring occasions of the at least two search space groups are located satisfy a same third condition or different third conditions.

Optionally, in a case that the slot level span corresponds to Q unit times and that Q is an integer greater than 1, the first rule includes at least one of the following:
within a first unit time, a start position of a first slot level span is a first slot within the first unit time, the first slot is a first slot configured with a PDCCH monitoring occasion within the first unit time, a start position of an (i+1)-th slot level span is a second slot, the second slot is configured with a PDCCH monitoring occasion and is different from a first slot of an i-th slot level span, and a maximum length of the slot level span is Y slots; and
within the first unit time, the start position of the first slot level span is a third slot within the first unit time, an index of the third slot is the same as an index of a fourth slot, the fourth slot is a slot with a smallest index among slots configured with PDCCH monitoring occasions within the Q unit times, the start position of the (i+1)-th slot level span is the second slot, the second slot is configured with a PDCCH monitoring occasion and is different from the first slot of the i-th slot level, and the maximum length of the slot level span is Y slots, where
the first unit time is any one of the Q unit times, and i is a positive integer.

Optionally, a symbol at which a monitoring occasion of a target search space group is located satisfies a fourth condition, and the fourth condition includes at least one of the following:
within first Y' symbols of a slot;
within Y' consecutive symbols of the slot; and
a quantity of symbols in the slot is not greater than Y', where
the target search space group is one of the R search space groups, and Y' is a positive integer.

Optionally, slots in which the R search space groups are located satisfy a same fourth condition or different fourth conditions.

Optionally, in a case that a pattern of a symbol level span is determined based on a second rule, a symbol at which a monitoring occasion of a target search space is located satisfies a fifth condition, and the fifth condition includes:
a distance between start symbols of consecutive symbol level spans is not less than X' symbols, where
the target search space group is one of the R search space groups, and X' is a positive integer.

Optionally, slots in which the R search space groups are located satisfy a same fifth condition or different fifth conditions.

Optionally, in a case that the symbol level span corresponds to K unit times and that K is an integer greater than 1, the second rule includes at least one of the following:
within a second unit time, a start position of a first symbol level span is a first symbol within the second unit time, the first symbol is a first symbol configured with a PDCCH monitoring occasion within the second unit time, a start position of an (i+1)-th symbol level span is a second symbol, the second symbol is configured with a PDCCH monitoring occasion and is different from a first symbol of an i-th symbol level span, and a maximum length of the symbol level span is Y symbols; and
within the second unit time, the start position of the first symbol level span is a third symbol within the first unit time, an index of the third symbol is the same as an index of a fourth symbol, the fourth symbol is a symbol with a smallest index among symbols configured with PDCCH monitoring occasions within the K unit times, the start position of the (i+1)-th symbol level span is the second symbol, the second symbol is configured with a PDCCH monitoring occasion and is different from the first symbol of the i-th symbol level, and the maximum length of the symbol level span is Y symbols, where
the second unit time is any one of the K unit times, and i is a positive integer.

Optionally, PDCCH processing parameters corresponding to the R search space groups satisfy at least one of the following:
the PDCCH processing parameters corresponding to the R search space groups are determined based on a PDCCH monitoring capability corresponding to a reference search space group; and
the PDCCH processing parameters corresponding to the R search space groups are determined independently.

Optionally, in a case that the PDCCH processing parameters corresponding to the R search space groups are determined based on the PDCCH monitoring capability corresponding to the reference search space group, PDCCH processing parameters corresponding to a target search space group satisfy at least one of the following:
in a case that the reference search space group corresponds to a PDCCH monitoring capability based on a slot group, the PDCCH processing parameters corresponding to the target search space group are calculated based on a first slot group, where the first slot group is a slot group of the reference search space group; and
in a case that the reference search space group corresponds to a PDCCH monitoring capability based on a slot level span, the PDCCH processing parameters corresponding to the target search space group are calculated based on a second slot group, where the second slot group is determined based on a pattern of the slot level span.

Optionally, the second slot group satisfies:
a start slot is a start slot of an i-th slot level span; and
an end slot is a slot previous to a start slot of an (i+1)-th slot level span, where
i is a positive integer.

The PDCCH monitoring apparatus in this embodiment of this application may be an apparatus, or an apparatus or an electronic device with an operating system, or may be a component, an integrated circuit, or a chip in a terminal. The apparatus or the electronic device may be a mobile terminal, or may be a nonmobile terminal. For example, the mobile terminal may include but is not limited to the foregoing illustrated type of the terminal 11. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The PDCCH monitoring apparatus 500 provided in this embodiment of this application can implement each process implemented by the method embodiment in FIG. 2, with the same technical effect achieved. To avoid repetition, details are not described herein again.

As shown in FIG. 6, a PDCCH monitoring apparatus 600 includes:
a second sending module 601, configured to send first information, where the first information includes at least one of the following: a search space configuration and a PDCCH monitoring capability configuration.

Optionally, the PDCCH monitoring apparatus 600 further includes:
a receiving module, configured to receive, second information, where the second information is used to indicate PDCCH monitoring capability information corresponding to R search space groups.

Optionally, PDCCH monitoring capability information of a target search space group includes at least one of the following:
first sub-information, used to indicate whether the target search space group supports a PDCCH monitoring capability based on a slot group;
second sub-information, used to indicate whether the target search space group supports a PDCCH monitoring capability based on a slot level span;
third sub-information, used to indicate at least one of the following: a quantity of cells in which the target search space group supports the PDCCH monitoring capability based on the slot group and a quantity of cells in which the target search space group supports the PDCCH monitoring capability based on the slot level span; and
fourth sub-information, used to indicate whether a target cell supports any one of the following: the PDCCH monitoring capability based on the slot group, the PDCCH monitoring capability based on the slot level span, and a PDCCH monitoring capability corresponding to a first version, where the PDCCH monitoring capability corresponding to the first version is the PDCCH monitoring capability based on the slot group or the PDCCH monitoring capability based on the slot level span, and the target cell is any cell in a cell set, where
the target search space group is a target search space group among the R search space groups.

Optionally, in a case that the first sub-information indicates that the target search space group supports the PDCCH monitoring capability based on the slot group, the PDCCH monitoring capability information of the target search space group further includes at least one of the following:
a quantity X1 of slots included in the slot group;
a time offset O1 of a start slot of the slot group; and
a quantity Y1 of configurable PDCCH monitoring occasions in the slot group.

Optionally, in a case that the second sub-information indicates that the target search space group supports the PDCCH monitoring capability based on the slot level span, the PDCCH monitoring capability information of the target search space group further includes at least one of the following:
a minimum quantity X2 of slots between consecutive slot level spans;
a maximum quantity Y2 of consecutive slots in the slot level span;
a quantity M of slots included in a unit time corresponding to the slot level span; and
a time offset O1 of the unit time corresponding to the slot level span.

Optionally, the PDCCH monitoring capability information corresponding to the R search space groups is the same or different.

The PDCCH monitoring apparatus in this embodiment of this application may be an apparatus, or an apparatus or an electronic device with an operating system, or may be a component, an integrated circuit, or a chip in a network-side device. The network-side device may include but is not limited to the foregoing illustrated type of the network-side device 12. This is not specifically limited in this embodiment of this application.

The PDCCH monitoring apparatus 600 provided in this embodiment of this application can implement each process implemented by the method embodiment in FIG. 3, with the same technical effect achieved. To avoid repetition, details are not described herein again.

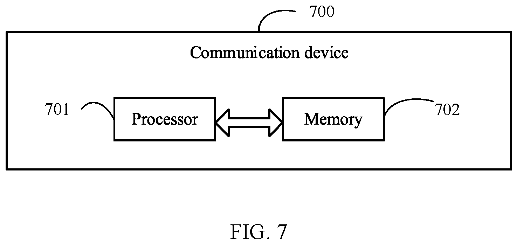

Optionally, as shown in FIG. 7, an embodiment of this application further provides a communication device 700, including a processor 701, a memory 702, and a program or instructions stored in the memory 702 and capable of running on the processor 701. For example, when the communication device 700 is a terminal, and the program or instructions are executed by the processor 701, each process of the foregoing method embodiment in FIG. 2 is implemented, with the same technical effect achieved. When the communication device 700 is a network-side device, and the program or instructions are executed by the processor 701, each process of the foregoing method embodiment in FIG. 3 is implemented, with the same technical effect achieved. To avoid repetition, details are not described herein again.

An embodiment of this application further provides a terminal, including a processor and a communication interface.

The communication interface is configured to:
receive first information, where the first information includes at least one of the following: a search space configuration and a PDCCH monitoring capability configuration.

The processor is configured to:
determine, based on the first information, PDCCH monitoring capabilities corresponding to R search space groups of the terminal (R search space sets for the UE), where R is a positive integer; and
monitor PDCCHs of N cell groups of the terminal based on the PDCCH monitoring capabilities corresponding to the R search space groups.

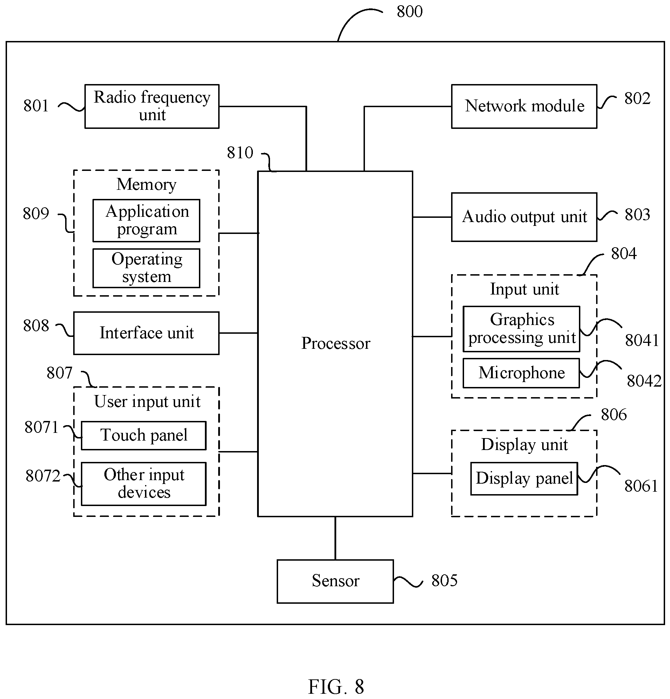

The terminal embodiment corresponds to the foregoing UE-side method embodiment, and each implementation process and implementation of the foregoing method embodiment can be applied to the terminal embodiment, with the same technical effect achieved. Specifically, FIG. 8 is a schematic diagram of a hardware structure of a terminal for implementing an embodiment of this application.

The terminal 800 includes but is not limited to at least some components such as a radio frequency unit 801, a network module 802, an audio output unit 803, an input unit 804, a sensor 805, a display unit 806, a user input unit 808, an interface unit 808, a memory 809, and a processor 810.

A person skilled in the art may understand that the terminal 800 may further include a power supply (for example, a battery) supplying power to all components. Optionally, the power supply may be logically connected to the processor 810 through a power management system. In this way, functions such as charge management, discharge management, and power consumption management are implemented by using the power management system. The terminal structure shown in FIG. 8 does not constitute a limitation on the terminal. The terminal may include more or fewer components than those shown in the figure, or some components are combined, or component arrangements are different. Details are not described herein again.

It should be understood that, in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 808 includes a touch panel 8081 and other input devices 8082. The touch panel 8081 is also referred to as a touchscreen. The touch panel 8081 may include two parts: a touch detection apparatus and a touch controller. The other input devices 8082 may include but are not limited to a physical keyboard, a function key (such as a volume control button or a power button), a trackball, a mouse, and a joystick. Details are not described herein again.

In this embodiment of this application, after receiving downlink data from a network-side device, the radio frequency unit 801 sends the downlink data to the processor 810 for processing, and in addition, sends uplink data to the network-side device. Generally, the radio frequency unit 801 includes but is not limited to an antenna, at least one amplifier, a transceiver, a coupler, a low noise amplifier, a duplexer, and the like.

The memory 809 may be configured to store software programs or instructions and various data. The memory 809 may primarily include a program or instruction storage area and a data storage area. The program or instruction storage area may store an operating system, an application program or instructions (such as an audio play function and an image play function) required by at least one function, and the like. In addition, the memory 809 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 810 may include one or more processing units. Optionally, the processor 810 may integrate an application processor and a modem processor. The application processor mainly processes the operating system, a user interface, an application program, or an instruction. The modem processor mainly processes wireless communication. For example, the modem processor is a baseband processor. It may be understood that the modem processor may alternatively not be integrated in the processor 810.

The radio frequency unit 801 is configured to:
receive first information, where the first information includes at least one of the following: a search space configuration and a PDCCH monitoring capability configuration.

The processor 810 is configured to:
determine, based on the first information, PDCCH monitoring capabilities corresponding to R search space groups of the terminal, where R is a positive integer; and
monitor PDCCHs of N cell groups of the terminal based on the PDCCH monitoring capabilities corresponding to the R search space groups.

It should be noted that the terminal 800 in this embodiment can implement each process of the method embodiment in FIG. 2 in the embodiments of this application, with the same beneficial effect achieved. To avoid repetition, details are not described herein again.

An embodiment of this application further provides a network-side device, including a processor and a communication interface. The communication interface is configured to:
send first information, where the first information includes at least one of the following: a search space configuration and a PDCCH monitoring capability configuration.

The network-side device embodiment corresponds to the foregoing method embodiment of the network-side device, and each implementation process and implementation of the foregoing method embodiment can be applied to the network-side device embodiment, with the same technical effect achieved.

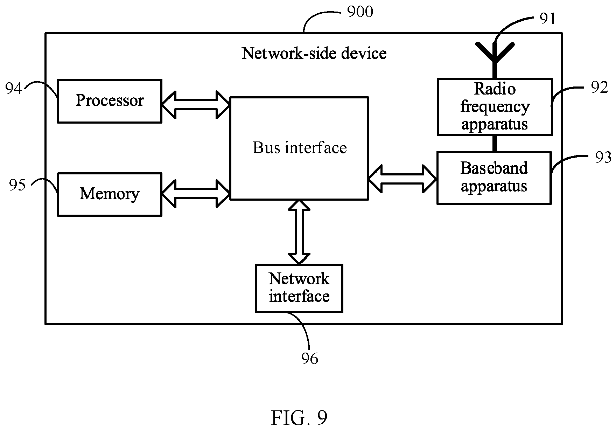

Specifically, an embodiment of this application further provides a network-side device. As shown in FIG. 9, the network-side device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; and the radio frequency apparatus 92 processes the received information and then sends the information out by using the antenna 91.

The radio frequency apparatus may be located in the baseband apparatus 93. The method performed by the network-side device in the foregoing embodiment may be implemented in the baseband apparatus 93, and the baseband apparatus 93 includes a processor 94 and a memory 95.

The baseband apparatus 93 may include, for example, at least one baseband processing unit, where a plurality of chips are disposed on the baseband processing unit. As shown in FIG. 9, one of the chips is, for example, the processor 94, connected to the memory 95, to invoke a program in the memory 95 to perform the operation of the network device shown in the foregoing method embodiment.

The baseband apparatus 93 may further include a network interface 96, configured to exchange information with the radio frequency apparatus 92, where the interface is, for example, a common public radio interface (common public radio interface, CPRI for short).

Specifically, the network-side device in this embodiment of this application further includes a program or instructions stored in the memory 95 and capable of running on the processor 94. The processor 94 invokes the program or instructions in the memory 95 to perform each process in the method embodiment in FIG. 3, or perform the method performed by each module shown in FIG. 6, with the same technical effect achieved. To avoid repetition, details are not described herein again.

An embodiment of this application further provides a computer-readable storage medium. The computer-readable storage medium stores a computer program. When the computer program is executed by a processor, each process of the foregoing PDCCH monitoring method embodiment is implemented, with the same technical effect achieved. To avoid repetition, details are not described herein again. The computer-readable storage medium is, for example, a read-only memory (Read-Only Memory, ROM), a random access memory (Random Access Memory, RAM), a magnetic disk, or an optical disc.

An embodiment of this application further provides a readable storage medium. The readable storage medium stores a program or instructions. When the program or instructions are executed by a processor, each process of the foregoing method embodiment shown in FIG. 2 or FIG. 3 is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the foregoing method embodiment shown in FIG. 2 or FIG. 3, with the same technical effect achieved. To avoid repetition, details are not described herein again.

It should be understood that the chip provided in this embodiment of this application may also be referred to as a system-level chip, a system chip, a chip system, a system-on-chip, or the like.

An embodiment of this application further provides a computer program product. The computer program product is stored in a readable storage medium. The computer program product is executed by at least one processor to implement each process of the foregoing method embodiment in FIG. 2 or FIG. 3, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific embodiments. The foregoing specific embodiments are merely illustrative rather than restrictive. Inspired by this application, a person of ordinary skill in the art can still derive a plurality of variations without departing from the essence of this application and the protection scope of the claims. All these variations shall fall within the protection scope of this application.

## Claims

1. A physical downlink control channel PDCCH monitoring method, comprising:
receiving, by a terminal, first information, wherein the first information comprises at least one of the following: a search space configuration and a PDCCH monitoring capability configuration;
determining, by the terminal based on the first information, PDCCH monitoring capabilities corresponding to R search space groups of the terminal, wherein R is a positive integer; and
monitoring, by the terminal, PDCCHs of N cell groups of the terminal based on the PDCCH monitoring capabilities corresponding to the R search space groups.

2. The method according to claim 1, wherein the N cell groups comprise at least one of the following:
a first cell group, wherein all cells comprised in the first cell group are serving cells or scheduling cells;
a second cell group, wherein the second cell group comprises only a single serving cell or a single scheduling cell; and
a third cell group, wherein cells comprised in the third cell group satisfy a first condition.

3. The method according to claim 2, wherein the first condition comprises at least one of the following:
the cells are scheduling cells;
subcarrier spacings SCSs of the cells are the same;
PDCCH monitoring capabilities corresponding to the cells are the same; and
the cells belong to a same dual-connectivity cell group.

4. The method according to claim 1, wherein search spaces comprise P common search space types and Q UE-specific search space types, wherein P and Q are both integers greater than 1; and
the R search space groups comprise at least one of the following:
a first search space group, wherein the first search space group corresponds to the P common search space types and the Q UE-UE-specific search space types;
a second search space group, wherein the second search space group corresponds to all or part of the P common search space types;
a third search space group, wherein the third search space group corresponds to all or part of the Q UE-specific search space types; and
a fourth search space group, wherein the fourth search space group corresponds to all or part of the P common search space types and all or part of the Q UE-specific search space types.

5. The method according to claim 1, wherein before the receiving, by a terminal, first information, the method further comprises:
sending, by the terminal, second information, wherein the second information is used to indicate PDCCH monitoring capability information corresponding to the R search space groups.

6. The method according to claim 5, wherein PDCCH monitoring capability information of a target search space group comprises at least one of the following:
first sub-information, used to indicate whether the target search space group supports a PDCCH monitoring capability based on a slot group;
second sub-information, used to indicate whether the target search space group supports a PDCCH monitoring capability based on a slot level span;
third sub-information, used to indicate at least one of the following: a quantity of cells in which the target search space group supports the PDCCH monitoring capability based on the slot group and a quantity of cells in which the target search space group supports the PDCCH monitoring capability based on the slot level span; and
fourth sub-information, used to indicate whether a target cell supports any one of the following: the PDCCH monitoring capability based on the slot group, the PDCCH monitoring capability based on the slot level span, and a PDCCH monitoring capability corresponding to a first version, wherein the PDCCH monitoring capability corresponding to the first version is the PDCCH monitoring capability based on the slot group or the PDCCH monitoring capability based on the slot level span, and the target cell is any cell in a cell set, wherein
the target search space group is one of the R search space groups.

7. The method according to claim 6, wherein in a case that the first sub-information indicates that the target search space group supports the PDCCH monitoring capability based on the slot group, the PDCCH monitoring capability information of the target search space group further comprises at least one of the following:
a quantity X1 of slots comprised in the slot group;
a time offset O1 of a start slot of the slot group; and
a quantity Y1 of configurable PDCCH monitoring occasions in the slot group.

8. The method according to claim 6, wherein in a case that the second sub-information indicates that the target search space group supports the PDCCH monitoring capability based on the slot level span, the PDCCH monitoring capability information of the target search space group further comprises at least one of the following:
a minimum quantity X2 of slots between consecutive slot level spans;
a maximum quantity Y2 of consecutive slots in the slot level span;
a quantity M of slots comprised in a unit time corresponding to the slot level span; and
a time offset O1 of the unit time corresponding to the slot level span.

9. The method according to claim 5, wherein the PDCCH monitoring capability information corresponding to the R search space groups is the same or different.

10. The method according to claim 1, wherein in a case that a target search space group corresponds to a PDCCH monitoring capability based on a slot group, a slot in which a monitoring occasion of the target search space group is located satisfies a second condition, and the second condition comprises at least one of the following:
within first Y1 slots of the slot group;
within Y1 consecutive slots of the slot group; and
a quantity of slots in the slot group is not greater than Y1, wherein
the target search space group is one of the R search space groups, and Y1 is a quantity of configurable PDCCH monitoring occasions in the slot group.

11. The method according to claim 10, wherein in a case that the R search space groups comprise at least two search space groups corresponding to the PDCCH monitoring capability based on the slot group, slots in which monitoring occasions of the at least two search space groups are located satisfy a same second condition or different second conditions.

12. The method according to claim 1, wherein in a case that a target search space group corresponds to a PDCCH monitoring capability based on a slot level span and that a pattern of the slot level span is determined based on a first rule, a slot in which a monitoring occasion of the target search space group is located satisfies a third condition, and the third condition comprises:
a distance between start slots of consecutive slot level spans is not less than X2 slots, wherein
the target search space group is one of the R search space groups, and X2 is a minimum quantity of slots between consecutive slot level spans.

13. The method according to claim 12, wherein in a case that the R search space groups comprise at least two search space groups corresponding to the PDCCH monitoring capability based on the slot level span, slots in which monitoring occasions of the at least two search space groups are located satisfy a same third condition or different third conditions.

14. The method according to claim 12, wherein in a case that the slot level span corresponds to Q unit times and that Q is an integer greater than 1, the first rule comprises at least one of the following:
within a first unit time, a start position of a first slot level span is a first slot within the first unit time, the first slot is a first slot configured with a PDCCH monitoring occasion within the first unit time, a start position of an (i+1)-th slot level span is a second slot, the second slot is configured with a PDCCH monitoring occasion and is different from a first slot of an i-th slot level span, and a maximum length of the slot level span is Y slots; and
within the first unit time, the start position of the first slot level span is a third slot within the first unit time, an index of the third slot is the same as an index of a fourth slot, the fourth slot is a slot with a smallest index among slots configured with PDCCH monitoring occasions within the Q unit times, the start position of the (i+1)-th slot level span is the second slot, the second slot is configured with a PDCCH monitoring occasion and is different from the first slot of the i-th slot level, and the maximum length of the slot level span is Y slots, wherein
the first unit time is any one of the Q unit times, and i is a positive integer.

15. The method according to claim 1, wherein a symbol at which a monitoring occasion of a target search space group is located satisfies a fourth condition, and the fourth condition comprises at least one of the following:
within first Y' symbols of a slot;
within Y' consecutive symbols of the slot; and
a quantity of symbols in the slot is not greater than Y', wherein
the target search space group is one of the R search space groups, and Y' is a positive integer.

16. The method according to claim 15, wherein slots in which the R search space groups are located satisfy a same fourth condition or different fourth conditions.

17. The method according to claim 1, wherein in a case that a pattern of a symbol level span is determined based on a second rule, a symbol at which a monitoring occasion of a target search space group is located satisfies a fifth condition, and the fifth condition comprises:
a distance between start symbols of consecutive symbol level spans is not less than X' symbols, wherein
the target search space group is one of the R search space groups, and X' is a positive integer.

18. The method according to claim 17, wherein slots in which the R search space groups are located satisfy a same fifth condition or different fifth conditions.

19. The method according to claim 17, wherein in a case that the symbol level span corresponds to K unit times and that K is an integer greater than 1, the second rule comprises at least one of the following:
within a second unit time, a start position of a first symbol level span is a first symbol within the second unit time, the first symbol is a first symbol configured with a PDCCH monitoring occasion within the second unit time, a start position of an (i+1)-th symbol level span is a second symbol, the second symbol is configured with a PDCCH monitoring occasion and is different from a first symbol of an i-th symbol level span, and a maximum length of the symbol level span is Y symbols; and
within the second unit time, the start position of the first symbol level span is a third symbol within the first unit time, an index of the third symbol is the same as an index of a fourth symbol, the fourth symbol is a symbol with a smallest index among symbols configured with PDCCH monitoring occasions within the K unit times, the start position of the (i+1)-th symbol level span is the second symbol, the second symbol is configured with a PDCCH monitoring occasion and is different from the first symbol of the i-th symbol level span, and the maximum length of the symbol level span is Y symbols, wherein
the second unit time is any one of the K unit times, and i is a positive integer.

20. The method according to claim 1, wherein PDCCH processing parameters corresponding to the R search space groups satisfy at least one of the following:
the PDCCH processing parameters corresponding to the R search space groups are determined based on a PDCCH monitoring capability corresponding to a reference search space group; and
the PDCCH processing parameters corresponding to the R search space groups are determined independently.

21. The method according to claim 20, wherein in a case that the PDCCH processing parameters corresponding to the R search space groups are determined based on the PDCCH monitoring capability corresponding to the reference search space group, PDCCH processing parameters corresponding to a target search space group satisfy at least one of the following:
in a case that the reference search space group corresponds to a PDCCH monitoring capability based on a slot group, the PDCCH processing parameters corresponding to the target search space group are calculated based on a first slot group, wherein the first slot group is a slot group of the reference search space group; and
in a case that the reference search space group corresponds to a PDCCH monitoring capability based on a slot level span, the PDCCH processing parameters corresponding to the target search space group are calculated based on a second slot group, wherein the second slot group is determined based on a pattern of the slot level span.

22. The method according to claim 21, wherein the second slot group satisfies:
a start slot is a start slot of an i-th slot level span; and
an end slot is a slot previous to a start slot of an (i+1)-th slot level span, wherein
i is a positive integer.

23. A PDCCH monitoring method, comprising:
sending, by a network-side device, first information, wherein the first information comprises at least one of the following: a search space configuration and a PDCCH monitoring capability configuration.

24. The method according to claim 23, wherein before the sending, by a network-side device, first information, the method further comprises:
receiving, by the network-side device, second information, wherein the second information is used to indicate PDCCH monitoring capability information corresponding to R search space groups.

25. The method according to claim 24, wherein PDCCH monitoring capability information of a target search space group comprises at least one of the following:
first sub-information, used to indicate whether the target search space group supports a PDCCH monitoring capability based on a slot group;
second sub-information, used to indicate whether the target search space group supports a PDCCH monitoring capability based on a slot level span;
third sub-information, used to indicate at least one of the following: a quantity of cells in which the target search space group supports the PDCCH monitoring capability based on the slot group and a quantity of cells in which the target search space group supports the PDCCH monitoring capability based on the slot level span; and
fourth sub-information, used to indicate whether a target cell supports any one of the following: the PDCCH monitoring capability based on the slot group, the PDCCH monitoring capability based on the slot level span, and a PDCCH monitoring capability corresponding to a first version, wherein the PDCCH monitoring capability corresponding to the first version is the PDCCH monitoring capability based on the slot group or the PDCCH monitoring capability based on the slot level span, and the target cell is any cell in a cell set, wherein
the target search space group is a target search space group among the R search space groups.

26. The method according to claim 25, wherein in a case that the first sub-information indicates that the target search space group supports the PDCCH monitoring capability based on the slot group, the PDCCH monitoring capability information of the target search space group further comprises at least one of the following:
a quantity X1 of slots comprised in the slot group;
a time offset O1 of a start slot of the slot group; and
a quantity Y1 of configurable PDCCH monitoring occasions in the slot group.

27. The method according to claim 25, wherein in a case that the second sub-information indicates that the target search space group supports the PDCCH monitoring capability based on the slot level span, the PDCCH monitoring capability information of the target search space group further comprises at least one of the following:
a minimum quantity X2 of slots between consecutive slot level spans;
a maximum quantity Y2 of consecutive slots in the slot level span;
a quantity M of slots comprised in a unit time corresponding to the slot level span; and
a time offset O1 of the unit time corresponding to the slot level span.

28. The method according to claim 24, wherein the PDCCH monitoring capability information corresponding to the R search space groups is the same or different.

29. A PDCCH monitoring apparatus, comprising:
a first receiving module, configured to receive first information, wherein the first information comprises at least one of the following: a search space configuration and a PDCCH monitoring capability configuration;
a first determining module, configured to determine, based on the first information, PDCCH monitoring capabilities corresponding to R search space groups of the terminal, wherein R is a positive integer; and
a monitoring module, configured to monitor PDCCHs of N cell groups of the terminal based on the PDCCH monitoring capabilities corresponding to the R search space groups.

30. A PDCCH monitoring apparatus, comprising:
a second sending module, configured to send first information, wherein the first information comprises at least one of the following: a search space configuration and a PDCCH monitoring capability configuration.

31. A terminal, comprising a processor, a memory, and a program or instructions stored in the memory and capable of running on the processor, wherein when the program or instructions are executed by the processor, the steps of the PDCCH monitoring method according to any one of claims 1 to 22 are implemented.

32. A network-side device, comprising a processor, a memory, and a program or instructions stored in the memory and capable of running on the processor, wherein when the program or instructions are executed by the processor, the steps of the PDCCH monitoring method according to any one of claims 23 to 28 are implemented.

33. A readable storage medium, wherein the readable storage medium stores a program or instructions, and when the program or instructions are executed by a processor, the steps of the PDCCH monitoring method according to any one of claims 1 to 22 are implemented, or the steps of the PDCCH monitoring method according to any one of claims 23 to 28 are implemented.
